# EUROPÄISCHE PATENTSCHRIFT

(11) **EP 0 675 945 B1**
(45) Veröffentlichungstag und Bekanntmachung des Hinweises auf die Patenterteilung: **05.03.1997**
(21) Anmeldenummer: 94902750.2
(22) Anmeldetag: 10.12.1993
(51) Int. Cl.: C11D 3/43, C11D 3/37, C11D 3/38

(54) **NEUTRALES WISCHPFLEGEMITTEL (I)**
NEUTRAL CLEANING AGENTS (I)
PRODUIT D'ENTRETIEN NEUTRE POUR SOLS (I)

(30) Priorität: 22.12.1992 DE 4243475
(43) Veröffentlichungstag der Anmeldung: 11.10.1995
(73) Patentinhaber: Henkel-Ecolab GmbH & Co. OHG, 40554 Düsseldorf (DE)
(72) Erfinder: SKODELL, Birgit, D-40889 Düsseldorf (DE); OSBERGHAUS, Rainer, D-40593 Düsseldorf (DE); ROGMANN, Karl-Heinz, D-40880 Ratingen (DE); FAUBEL, Heiko, D-42929 Wermelskirchen (DE); GECKS, Andreas, D-40595 Düsseldorf (DE)
(74) Vertreter: Wilk, Hans-Christof, Dr.
(86) Internationale Anmeldenummer: EP9303490
(87) Internationale Veröffentlichungsnummer: WO9414942

(56) Entgegenhaltungen:
- EP-A- 0 126 545
- EP-A- 0 197 480
- WO-A-89/12673
- DE-A- 2 527 515

## Beschreibung

Die vorliegende Erfindung betrifft ein wäßriges Mittel, das in verdünntem Zustand zur Reinigung und Pflege von harten Oberflächen, insbesondere Fußböden, eingesetzt werden kann.

Zur Reinigung und Pflege von Fußböden sind in den letzten Jahren und Jahrzehnten, bedingt nicht zuletzt durch die Entwicklung neuer Materialien für Fußbodenbeläge, zahlreiche neue Verfahren und Mittel entwickelt worden. In der Praxis wird die Auswahl der Mittel wesentlich dadurch bestimmt, ob vordringlich eine Reinigung oder eine Konservierung der Oberfläche erreicht werden soll. So verwendet man zur Pflege und Konservierung von Oberflächen in erster Linie solche Mittel, die mehr oder weniger harte widerstandsfähige Filme erzeugen. Die Mittel enthalten zu diesem Zweck, meist in emulgierter Form, Wachse oder filmbildende Polymere und vernetzende Wirkstoffe, in der Regel Schwermetallsalze, die zusammen nach dem Abtrocknen auf den behandelten Flächen selbstglänzende oder polierbare Filme bilden. Auf diese Weise läßt sich eine lang anhaltende Konservierung der Oberflächen erreichen, wobei je nach Qualität des Films auch starke mechanische Beanspruchungen gut vertragen werden. Die Entfernung derartiger Filme ist allerdings, wenn sie, etwa wegen Verschmutzung oder Beschädigung, notwendig wird, nur unter extremen Bedingungen möglich. Im Gegensatz dazu enthalten Mittel, deren Wirkungschwerpunkt bei der Reinigung liegt, hohe Anteile an Tensiden, oft zusammen mit alkalische reagierenden Stoffen, organischen Lösungsmitteln oder Abrasivstoffen. Mit diesen Mitteln ist in vielen Fällen eine gründliche Entfernung von Verschmutzungen und alten Belägen möglich, doch sind die so gereinigten Oberflächen danach in der Regel der Wiederanschmutzung schutzlos ausgesetzt, sofern nicht eine Konservierungsbehandlung angeschlossen wird.

Da in vielen Fällen Reinigung und Pflege der Fußbodenoberfläche gleichermaßen erwünscht sind, wurden neben diesen Mitteln auch solche entwickelt, mit deren Hilfe Reinigung und Konservierung in einem Arbeitsgang möglich sind. Beispiele derartiger Mittel finden sich etwa in den deutschen Patentanmeldungen 21 21 926, 25 27 515, 35 33 531 und der britischen Patentschrift 1 528 592. Während früher bei derartigen Mitteln eine mehr oder weniger stark alkalische Einstellung bevorzugt wurde, um eine hohe Reinigungsleistung und eine sichere Emulgierung der enthaltenen Wachse oder Polymeren zu erreichen, geht die Tendenz heute in Richtung neutral eingestellter Mittel, die eine bessere Hautverträglichkeit besitzen und auch stärker empfindliche Oberflächenmaterialien nicht angreifen. Diese Vorteile werden allerdings häufig mit geringerer Reinigungsleistung und einem geringeren Netzvermögen erkauft. Das heißt, der zunächst geschlossene Film des wäßrigen Mittels kann beim Eintrocknen aufreißen und sich unter Umständen sogar zu einzelnen Tropfen zusammenziehen, so daß der entstehende Pflegemittelfilm ein fleckiges Aussehen erhält. Auch neutrale Mittel, wie sie beispielsweise in der EP 197 480 mit einem geringen Gehalt an hochpolymeren Polyethylenglykolen als Geschirrspülmittel vorgeschlagen wurden, eignen sich nicht für die Pflege von Fußböden. Hier eine Verbesserung zu schaffen, war eine der Aufgaben der vorliegenden Erfindung. Gleichzeitig sollte die Stabilität der Mittel vor allem bei Lagerung in der Kälte verbessert werden.

Gegenstand der Erfindung ist ein wäßriges Mittel zur Reinigung und Pflege von harten Oberflächen, insbesondere Fußböden, das in unverdünntem Zustand einen pH-Wert zwischen 5 und 9 aufweist und das neben 1 bis 25 Gew.-% Tensid und 1 bis 30 Gew.-% an filmbildenden Materialien aus der Gruppe Wachse, Polymere und deren Mischungen 0,05 bis 11 Gew.-% eines Alkohols aus der Gruppe Benzylalkohol, 2-Phenylethanol, 2-Phenoxyethanol und deren Mischungen enthält. Vorzugsweise soll das Mittel einen pH-Wert zwischen 6 und 8 aufweisen.

Die neuen Mittel besitzen eine für neutrale Mittel ungewöhnlich hohe Reinigungskraft. Besonders bemerkenswert ist das außerordentlich gleichmäßige Antrockenverhalten, bei dem ein Aufreißen des Films praktisch nicht zu beobachten ist, so daß gleichmäßige, optisch einwandfreie Pflegefilme resultieren. Darüber hinaus zeichnen sich die neuen Mittel durch hohe Lagerstabilität aus; sie neigen auch bei niedrigen Temperaturen nicht zur Phasentrennung, selbst dann, wenn größere Mengen an Parfümöl enthalten sind.

Bei den in den Mitteln enthaltenen Tensiden kann es sich um nichtionische, anionische, amphotere und kationische Tenside handeln. Vorzugsweise werden Mischungen aus Tensiden mehrerer dieser Klassen verwendet. Besonders bevorzugt werden anionische und nichtionische Tenside und deren Mischungen.

Als nichtionische Tenside eignen sich in erster Linie die Anlagerungsprodukte von 3 bis 20 Mol Ethylenoxid (E0) an primäre C₁₀-C₂₀-Alkohole, wie z. B. an Kokos- oder Talgfettalkohole, an Oleylalkohol, an Oxoalkohole oder an sekundäre Alkohole dieser Kettenlänge. Dabei können neben den hierbei umfaßten wasserlöslichen nichtionischen Tensiden auch die nicht vollständig wasserlöslichen niedrig ethoxylierten Fettalkohol-Polyglykolether mit 3 bis 7 Ethylenglykoletherresten im Molekül von Interesse sein, vor allem dann, wenn sie zusammen mit wasserlöslichen nichtionischen oder anionischen Tensiden eingesetzt werden. Ebenfalls geeignet sind die entsprechenden Ethoxylierungsprodukte anderer langkettiger Verbindungen, beispielsweise der Fettsäuren und der Fettsäureamide mit 12 bis 18 C-Atomen und der Alkylphenole mit 8 bis 16 C-Atomen im Alkylteil. In all diesen Produkten kann anstelle eines Teils des Ethylenoxids auch Propylenoxid (PO) angelagert sein. Weitere geeignete nichtionische Tenside sind auch die wasserlöslichen, 20 bis 250 Ethylenglykolethergruppen und 10 bis 100 Propylenglykolethergruppen enthaltenden Anlagerungsprodukte von Ethylenoxid an Polypropylenglykol, Alkylendiaminpolypropylenglykol und an Alkylpolypropylenglykol mit 1 bis 10 Kohlenstoffatomen in der Alkylkette, in denen die Polypropylenglykolkette als hydrophober Rest fungiert. Als nichtionische Tenside eignen sich ebenfalls Mono- und Diethanolamide der Fettsäuren sowie langkettige Aminoxide oder Sulfoxide, beispielsweise die Verbindungen N-Kokosalkyl-N,N-dimethylaminoxid, N-Talgalkyl-N,N-dihydroxyethylaminoxid und auch die wasserlöslichen Alkylglycoside, deren hydrophober C₈-C₂₀-Alkylrest mit einem meist oligomeren hydrophilen Glykosidrest glykosidisch verknüpft ist, beispielsweise C₁₂-C₁₄-Fettalkohol + 1,6 Glucose. In den erfindungsgemäßen Mitteln werden als nichtionische Tenside, Ethoxylate von Fettalkoholen oder Oxoalkoholen mit 5 bis 15 Mol E0, Fettsäureethanolamide und Alkylpolyglucoside bevorzugt.

Als anionische Tenside kommen sowohl synthetische anionische Tenside als auch Seifen infrage. Bei den Seifen handelt es sich um die wasserlöslichen Salze langkettiger Fettsäuren mit vorzugsweise 12 bis 18 C-Atomen, beispielsweise Kokosfettsäurenatriumsalz und Talgfettsäurenatriumsalz.

Bei den synthetischen anionischen Tensiden handelt es sich vor allem um solche vom Typ der Sulfonate und Sulfate. Als Tenside vom Sulfonattyp kommen Alkylbenzolsulfonate mit einem C₉-C₁₅-Alkylrest und Olefinsulfonate, d. h. Gemische aus Alken- und Hydroxyalkansulfonaten sowie Disulfonaten, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch die Alkansulfonate, die aus C₁₂-C₁₈-Alkanen durch Sulfochlorierung oder Sulfoxidation und anschließende Hydrolyse bzw. Neutralisation oder durch Bisulfitaddition an Olefine erhältlich sind sowie die Ester von α-Sulfofettsäuren, z. B. die α-sulfonierten Methyl- oder Ethylester der hydrierten Kokos-, Palmkern- oder Talgfettsäuren.

Geeignete Tenside vom Sulfattyp sind die Schwefelsäuremonoester von langkettigen primären Alkoholen natürlichen oder synthetischen Ursprungs, d. h. von Fettalkoholen, wie z. B. Kokosfettalkoholen, Oleylalkohol, Lauryl-, Myristyl-, Palmmityl- oder Stearylalkohol, oder den C₁₀-C₂₀-Oxoalkoholen oder sekundären Alkoholen dieser Kettenlänge. Auch die Schwefelsäuremonoester der mit 1 bis 6 Mol Ethylenoxid (E0) ethoxylierten aliphatischen langkettigen primären Alkohole bzw. ethoxylierten sekundären Alohole sind geeignet. Ferner eignen sich sulfatierte Fettsäurealkanolamide, sulfatierte Fettsäuremonoglyceride, langkettige Sulfobernsteinsäureester sowie die Salze von langkettigen Ethercarbonsäuren, die beispielsweise durch Umsetzung langkettiger, mit 1 bis 10 Mol E0 ethoxylierter Alkohole mit Chloressigsäure erhältlich sind. Die anionischen Tenside werden vorzugsweise als Alkalisalze, insbesondere Natriumsalze, eingesetzt, doch können auch Ammoniumsalze oder die Salze von Alkanolaminen mit 2 bis 6 C-Atomen verwendet werden. Besonders bevorzugte Aniontenside sind im Rahmen der vorliegenden Erfindungen die Alkansulfonate, die Olefinsulfonate und die Fettalkoholsulfate.

Nichtionische und anionische Tenside werden in den erfindungsgemäßen Mitteln bevorzugt und machen in der Mehrzahl der Fälle den überwiegenden oder gesamten Anteil der Tenside in den Mitteln aus. Besonders bevorzugt werden Mischungen aus anionischen und nichtionischen Tensiden, die vielfach zu synergistischen Effekten bei der Reinigungsleistung führen. Anstelle oder neben diesen Tensiden können aber auch amphotere Tenside und kationische Tenside eingesetzt werden, wobei die Kombination von anionischen und kationischen Tensiden in der Regel vermieden wird.

Bei den amphoteren Tensiden handelt es sich um langkettige Verbindungen, deren hydrophiler Teil aus einem kationisch geladenem Zentrum (üblicherweise eine tertiäre Amino- oder eine quartäre Ammoniumgruppe) und einem anionisch geladenem Zentrum (üblicherweise eine Carboxylat- oder eine Sulfonatgruppe) besteht. Beispiele derartiger Tenside sind N-Kokosalkyl-N,N-dimethylaminoacetat und N-Dodecyl-N,N-dimethyl-3-aminopropansulfonat.

Schließlich seien noch die kationischen Tenside erwähnt, die in den erfindungsgemäßen Mitteln enthalten sein können. Da sie mit der Mehrzahl der anionischen Tenside unlösliche Verbindungen bilden, werden sie üblicherweise nur zusammen mit nichtionischen und/oder amphoteren Tensiden eingesetzt. Wichtigste kationische Tenside sind quartäre Ammoniumverbindungen, die einen langkettigen Alkyl- oder Alkenylrest mit 12 bis 20 C-Atomen und drei kurzkettige Alkyl- oder Hydroxyalkylreste mit jeweils 1 bis 3 C-Atomen am Stickstoff aufweisen. Ein typisches Beispiel derartiger kationischer Tenside ist Kokosalkyltrimethylammoniumchlorid.

Der Gehalt an Tensiden liegt in den erfindungsgemäßen Mitteln zwischen 1 und 25 Gew.-%, vorzugsweise zwischen 5 und 10 Gew.-%.

Neben den Tensiden, die in erster Linie für die Reinigungswirkung verantwortlich sind, enthalten die erfindungsgemäßen Mittel pflegende Komponenten in Form von Wachsen und/oder filmbildenden Polymeren.

Als Wachse eignen sich sowohl natürliche Wachse als auch synthetische Wachse, die natürlichen Ursprungs aber auch vollsynthetisch hergestellt sein können. Beispiele sind Polyethylenwachse, oxidierte Polyethylenwachse, Montanesterwachse, Paraffinwachse, Candellilawachs und Carnaubawachs. Von diesen werden in den erfindungsgemäßen Mitteln Montanesterwachs, Polyethylenwachs und Carnaubawachs bevorzugt. Besonders bevorzugt werden Wachsmischungen aus Montanesterwachs und Polyethylenwachs sowie Montanesterwachs und Carnaubawachs.

Die Wachse liegen in den Mitteln in emulgierter Form vor. Sofern nicht überwiegend selbstemulgierende Wachse verwendet werden, enthalten die erfindungsgemäßen Mittel deshalb übliche Wachsemulgatoren in Mengen bis zu 10 Gew.-%, vorzugsweise zwischen 0,2 und 5 Gew.-%. Beispiele derartiger Emulgatoren sind Oleylcetylalkohol + 20 E0 und Sorbitmonooleat.

Bei den filmbildenden Polymerverbindungen handelt es sich um solche, die in Wasser bei neutralem pH-Wert wenigstens teilweise unlöslich sind und die eine minimale Filmbildetemperatur im Bereich zwischen etwa 0 und etwa 70 °C aufweisen. Es handelt sich dabei vorzugsweise um Polymere, die aus ethylenisch ungesättigten Monomeren hergestellt werden. Beispiele derartiger Monomerer sind Styrol, Acrylsäureester oder Methacrylsäureester aliphatischer, 1 bis 8 C-Atome aufweisender Alkohole, Acrylnitril, Vinylacetat, Acrylsäure und Methacrylsäure. Besonders bevorzugt werden Poly(meth)acrylate aus zwei oder mehr dieser Monomeren, die gegebenenfalls in untergeordneter Menge auch weitere Monomere enthalten können. Ganz besonders bevorzugte Polymere enthalten 1 bis 30 Gew.-Teile an carbonsäuregruppenhaltigen Monomeren, 30 bis 70 Gew.-Teile Monomere, die Homopolymere mit Glastemperaturen unter 20 °C bilden, vorzugsweise Ester der Acrylsäure mit C₁-C₈-Alkoholen und/oder der Methacrylsäure mit C₄-C₈-Alkoholen und 30 bis 70 Gew.-Teile Monomere, die Homopolymere mit Glastemperaturen über Raumtemperatur bilden, vorzugsweise Methacrylsäureester von C₁-C₃-Alkoholen oder Styrol. Werden mehrere unterschiedliche Polymerverbindungen der vorstehend genannten Art im Gemisch eingesetzt, soll die Filmbildetemperatur, die für das Gemisch ermittelt wird, im Bereich zwischen 0 und 70 °C liegen. Die genannten Filmbildungstemperaturen beziehen sich auf das weichmacherfreie System, d. h. auf die Polymeren ohne weitere Zusätze.

Beispiele derartiger filmbildender Polymerer sind folgende, als Dispersionen angebotene, Handelprodukte: Syntran® 1501 (Firma Interpolymer), Primal® 644 (Firma Rohm und Haas), Neocryl® A 1049 (Firma ICI).

Der Gehalt an pflegenden Komponenten (Summe aus Wachsen und filmbildenden Polymeren) beträgt in den erfindungsgemäßen Mitteln 1 bis 30 Gew.-%, vorzugsweise 4 bis 10 Gew.-%.

Beim dritten kennzeichnenden Bestandteil der erfindungsgemäßen Mittel handelt es sich um einen aromatischen Alkohol aus der Gruppe Benzylalkohol, 2-Phenylethanol und 2-Phenoxyethanol. Diese Alkohole können einzeln oder auch als Gemisch in den Mitteln enthalten sein. Sie scheinen im Zusammenwirken mit den Tensiden und den pflegend wirkenden Komponenten Wachs und filmbildendes Polymer für die oben geschilderten unerwarteten Eigenschaften der neuen Mittel verantwortlich zu sein. Im allgemeinen reichen geringe Mengen dieser Alkohole aus. Ihr Anteil an den erfindungsgemäßen Mitteln beträgt 0,05 bis 11 Gew.-%, vorzugsweise 1 bis 5 Gew.-%.

Neben den bereits genannten Bestandteilen können die erfindungsgemäßen Mittel weitere Wirk- und Zusatzstoffe enthalten, beispielsweise reinigungsaktive Salze, Lösungsmittel, Netzharze, Amine, Farbstoffe, Konservierungsmittel und Parfümöle, sofern die vorteilhaften Wirkungen der erfindungsgemäßen Mittel dadurch nicht beeinträchtigt werden.

Bei den reinigungsaktiven Salzen, die in Mengen bis zu 10 Gew.-% in den Mitteln enthalten sein können, handelt es sich um wasserlösliche Salze, insbesondere Alkalisalze, von anorganischen oder organischen Säuren, die dazu dienen, die Reinigungswirkung und die Materialverträglichkeit zu verbessern und gegebenenfalls die Einflüsse der Wasserhärte zurückzudrängen. Als Beispiele seien Natriumcitrat, Natriumtriphosphat, Monokaliumphosphat, Kaliumpyrophosphat, Kaliumcarbonat und Natriumhydrogencarbonat genannt.

Bei den Lösungsmitteln, die zusätzlich zu den obengenannten aromatischen Alkoholen in Mengen bis zu 15 Gew.-% enthalten sein können, handelt es sich um vollständig wassermischbare Lösungsmittel aus der Gruppen der Alkohole mit 2 bis 4 C-Atomen und der niederen Etheralkohole mit bis zu 8 C-Atomen, beispielsweise Ethanol, Isopropanol und Ethandiol.

Netzharze und andere Verlaufshilfsmittel dienen dazu, die Benetzung der behandelten Oberfläche beim Auftrag der verdünnten wäßrigen Lösungen des Wischpflegemittels zu verbessern. Typische Beispiele derartiger Netzharze sind Styrol-Maleinatharz und klargestellte Polyacrylate. Der Anteil der Netzharze an den erfindungsgemäßen Mitteln kann bis zu 15 Gew.-% betragen.

Amine werden in den erfindungsgemäßen Mitteln hauptsächlich dann eingesetzt, wenn es gilt, Wachse als filmbildende Wirkstoffe dauerhaft zu emulgieren. Vorzugsweise handelt es sich um Alkanolamine, insbesondere Monoethanolamin, Diethanolamin, und, besonders bevorzugt, Triethanolamin. Die Amine können in den Mitteln in Mengen bis zu 3 Gew.-% enthalten sein.

Im folgenden wird eine Reihe von typischen Rahmenrezepturen der erfindungsgemäßen Mittel angegeben. Die enthaltenen Alkohole aus der Gruppe Benzylalkohol, 2-Phenylethanol, 2-Phenoxyethanol und deren Mischungen sind darin als "aromatische Alkohole" bezeichnet.

### Neutrales Wischpflegemittel auf Basis von Kunststoffen

| | |
|---|---|
| Tenside | 1 bis 25 Gew.-% |
| filmbildende Polymere | 1 bis 20 Gew.-% |
| aromatische Alkohole | 0,05 bis 11 Gew.-% |
| reinigungsaktive Salze | 0 bis 10 Gew.-% |
| Netzharze | 0 bis 15 Gew.-% |
| Lösungsmittel | 0 bis 15 Gew.-% |
| Konservierungsmittel | 0 bis 10 Gew.-% |
| sonstige Hilfsstoffe | 0 bis 10 Gew.-% |
| (beispielsweise Farbstoffe und Parfümöle) | |
| Wasser | zu 100 Gew.-% |

### Neutrales Wischpflegemittel auf der Basis von Wachsen

| | |
|---|---|
| Tenside | 1,0 bis 20 Gew.-% |
| Wachse | 1 bis 20 Gew.-% |
| aromatische Alkohole | 0,05 bis 11 Gew.-% |
| Emulgatoren | 0 bis 10 Gew.-% |
| reinigungsaktive Salze | 0 bis 10 Gew.-% |
| Netzharze | 0 bis 15 Gew.-% |
| Amine | 0 bis 3 Gew.-% |
| Lösungsmittel | 0 bis 15 Gew.-% |
| Konservierungsmittel | 0 bis 10 Gew.-% |
| sonstige Hilfsmittel | 0 bis 10 Gew.-% |
| Wasser | zu 100 Gew.-% |

### Neutrales Wischpflegemittel auf Basis von Kunststoffen und Wachsen

| | |
|---|---|
| Tenside | 1,0 bis 15 Gew.-% |
| Wachse | 0,5 bis 15 Gew.-% |
| filmbildende Polymere | 0,5 bis 15 Gew.-% |
| aromatische Alkohole | 0,05 bis 11 Gew.-% |
| Emulgatoren | 0 bis 10 Gew.-% |
| reinigungsaktive Salze | 0 bis 10 Gew.-% |
| Netzharze | 0 bis 15 Gew.-% |
| Amine | 0 bis 3 Gew.-% |
| Lösungsmittel | 0 bis 15 Gew.-% |
| Konservierungsmittel | 0 bis 10 Gew.-% |
| sonstige Hilfsstoffe | 0 bis 10 Gew.-% |
| Wasser | zu 100 Gew.-% |

### Neutrales Wischpflegemittel auf Basis von Seife und Wachsen

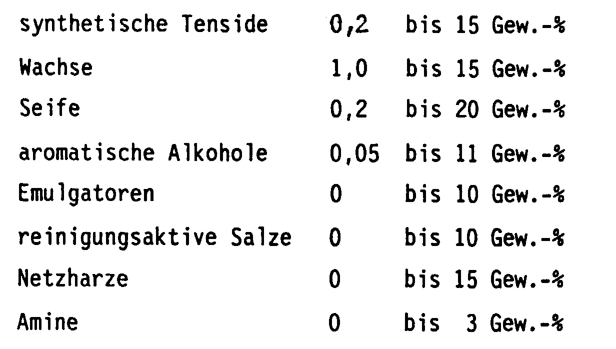

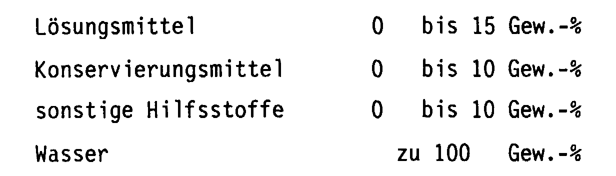

Gehalt an Tensiden insgesamt mindestens 1 Gew.-% und höchstens 25 Gew.-%.

Die Herstellung der Mittel kann im einfachsten Falle durch Zusammenmischen aller Komponenten in beliebiger Reihenfolge geschehen. Häufig ist es allerdings zweckmäßiger, von vorgefertigten Wachs- bzw. Polymerdispersionen in Wasser auszugehen und diese mit Wasser und den übrigen Bestandteilen der Mittel zu vermischen. Der pH-Wert wird nötigenfalls mit Hilfe von Alkalien oder Säuren auf den gewünschten Wert im Neutralbereich (pH 5 bis pH 9) eingestellt.

Die Anwendung der Mittel geschieht grundsätzlich nach Verdünnung mit Wasser, wobei der Verdünnungsgrad selbstverständlich von der Konzentration der Mittel abhängig ist. In der auf Anwendungskonzentration eingestellten verdünnten Lösung des Mittels soll der Gehalt an nichtflüchtigen Bestandteilen vorzugsweise zwischen 0,3 Gew.-% und 6 Gew.-% liegen. Dies kann je nach Konzentration der unverdünnten Mittel durch Verdünnung mit Wasser im Verhältnis 1 : 10 bis 1 : 200, vorzugsweise 1 : 50 bis 1 : 100 erreicht werden. Die Behandlung der Oberfläche mit der auf Anwendungskonzentration eingestellten Lösungen erfolgt dann in der Weise, daß ein saugfähiger Gegenstand, beispielsweise ein Lappen oder ein Schwamm, mit der Lösung getränkt wird die zu behandelnde Oberfläche mit diesen Gegenstand gleichmäßig gewischt wird. Bei diesem Vorgang werden Schmutz und evtl. vorhandene Filmreste aus früheren Behandlungen von der Oberfläche abgelöst und von dem Lappen bzw. Schwamm aufgenommen, um dann beim Ausspülen des Lappens oder Schwamms mit der verdünnten Reinigungsmittellösung an dieses Medium abgegeben zu werden. Der auf der Oberfläche verbleibende Flüssigkeitsfilm trocknet gleichmäßig an und hinterläßt einen dünnen pflegenden Film, der bei einer späteren gleichartigen Behandlung wieder abgelöst wird.

### Beispiele

### Wischpflegemittel auf Basis von Wachs

Durch Mischen der in Tabelle 1 angegebenen Komponenten wurden die Wischpflegemittel gemäß Beispielen 1 bis 4 hergestellt. Soweit nicht anders angegeben, stellen die Zahlen in dieser und der späteren Tabelle Gewichtsprozente, bezogen auf die fertigen Mittel, dar und sind stets als reine Wirksubstanz gerechnet.

Die erfindungsgemäßen Mittel 2 bis 4 wurden dann hinsichtlich ihrer Reinigungskraft und ihrer Kältestabilität mit dem nicht erfindungsgemäßen Mittel 1 verglichen.

Die Reinigungswirkung wurde mit Hilfe eines Gardner-Waschbarkeits- und Scheuerprüfgerätes ermittelt, wie es in den Qualitätsnormen für Wischpflegemittel des Industrieverbandes Putz- und Pflegemittel e. V. beschrieben ist (Seifen-Öle-Fette, Wachse, 108, Seiten 526 - 528 (1982)). Bei dieser Methode wird eine weiße PVC-Folien mit einer Testanschmutzung aus Ruß und Fett versehen und unter standardisierten Bedingungen mit einem mit verdünnter (1 : 100) Reinigungsmittel lösung getränkten Schwamm maschinell gewischt. Die Reinigungsleistung wird durch photoelektrische Bestimmung des Remissionsgrades gemessen.

Zur Beurteilung der Kältestabilität wurden die Proben bei 0 - 3 °C für 12 Wochen eingelagert. Während dieser Zeit wurden die Proben wöchentlich aus dem Gefrierschrank genommen und nach Erreichen der Raumtemperatur visuell beurteilt. Sichtbare Zeichen der Instabilität waren Ausflockungen, Bodensatz, Aufschwemmungen und Änderung der Viskosität. Die Bewertung wurde nach folgendem Maßstab vorgenommen:
0 einheitliche, homogene Probe
1 leichte Aufschwemmungen oder Bodensatz nach 12 Wochen
2 leichte Aufschwemmungen oder Bodensatz nach 3 Wochen
3 mittlere Aufschwemmung oder Bodensatz nach 3 Wochen
4 starke Aufschwemmungen oder Bodensatz nach 3 Wochen
5 sehr starke Aufschwemmungen oder Bodensatz nach 3 Wochen

**Tabelle 1:**

| Beispiele | 1 | 2 | 3 | 4 |
|---|---|---|---|---|
| Monochloracetamid | 0,2 | --- | --- | --- |
| Na-Benzoat | 0,1 | --- | --- | --- |
| KOH | 0,4 | 0,4 | 0,4 | 0,4 |
| C₁₆-C₁₈-Alkansulfonat-Na | 0,8 | 0,8 | 0,8 | 0,8 |
| Oleyl-cetylalkohol + 10 E0 | 3,5 | 3,5 | 3,5 | 3,5 |
| Palmkernfettsäure | 2,0 | 2,0 | 2,0 | 2,0 |
| Diethanolamin | 0,1 | 0,1 | 0,1 | 0,1 |
| Montanwachs | | | | |
| Tropfunkt 83 °C | 3,6 | 3,6 | 3,6 | 3,6 |
| Polyethylendispersion | | | | |
| Mol-Gew. 16000-20000 | 2,8 | 2,8 | 2,8 | 2,8 |
| Tetrakaliumpyrophosphat | 2,2 | 2,2 | 2,2 | 2,2 |
| Parfüm | 0,2 | 0,2 | 0,2 | 0,2 |
| 2-Phenoxyethanol | --- | 2,0 | --- | --- |
| 2-Phenylethanol | --- | --- | --- | 1,5 |
| Benzylalkohol | --- | --- | 2,0 | --- |
| Wasser | ad | ad | ad | ad |
| | 100 | 100 | 100 | 100 |
| pH-Wert | 8,9 | 8,9 | 8,9 | 8,9 |
| Lagerstabilität bei 0 - 3 °C | 2 | 0 | 0 | 0 |
| Remissionswerte nach Gardner 1%ig | 37 | 43 | 43 | 42 |

Aus den Prüfergebnissen werden die Vorteile der erfindungsgemäßen Mittel 2-4 gegenüber dem nicht erfindungsgemäßen Mittel 1 deutlich.

### Wischpflegemittel auf Basis von Polymeren

Aus den in Tabelle 2 angegebenen Komponenten wurden durch intensives Mischen die Wischpflegemittel 5 bis 8 hergestellt. In allen Fällen wurde als letzte Komponente das Parfüm eingemischt. Die erfindungsgemäßen Mittel 6 bis 8 wurden dann hinsichtlich Rückstandsverhalten bei der Reinigung fester Oberflächen und hinsichtlich lagerstabiler Einarbeitung des Parfümöls mit dem nicht erfindungsgemäßen Mittel 5 verglichen.

Das Rückstandverhalten der Mittel wurde geprüft, indem man je 100 ml einer 1 %igen Lösung des Mittels an einer schwarzen Kachelwand herablaufen und trocknen ließ. Nach dem vollständigen Abtrocknen wurde der Rückstand mittels einer Bewertungsskala von -5 bis 0 visuell beurteilt:
-5 sehr starker Schleier, nicht polierbar
-4 starke Schleier, schwer polierbar
-3 mittelstarke Schleier, schwer polierbar
-2 Schleierbildung, polierbar
-1 wenig Schleier, leicht polierbar
0 keine Schleier oder Beeinträchtigung im Glanz

Die Stabilität des Parfüms in den Mitteln wurde in einem Lagertest im Wechselklima (12 Stunden bei 0 °C, 12 Stunden bei 40 °C) überprüft. Auch hier erfolgte die Beurteilung visuell und zwar nach folgender Skala:
1. Sehr gutes Dispergiervermögen; die Parfümöltröpfchen sind gleichmäßig in der Lösung verteilt und trennen sich auch während des Lagertestes nicht mehr auf.
2. Gutes Dispergiervermögen; nur ein Teil des Parfüms scheidet sich erst am Ende des Lagertestes als Tröpfchen ab.
3. Mittleres Dispergiervermögen; ein Teil der Parfümtröpfchen scheiden sich bereits nach 4 Wochen Lagerdauer ab.
4. Schlechtes Dispergiervermögen; das gesamte Parfüm scheidet sich schon nach 4 Wochen Lagerdauer ab.

Die Prüfungsergebnisse lassen klar die Vorteile der erfindungsgemäßen Mittel 6 - 8 gegenüber dem nicht erfindungsgemäßen Mittel 5 erkennen.

**Tabelle 2:**

| Beispiel | 5 | 6 | 7 | 8 |
|---|---|---|---|---|
| Monochloracetamid | 0,1 | --- | --- | --- |
| Na-Benzoat | 0,05 | --- | --- | --- |
| C₁₂-Alkylbenzolsulfonat-Na | 12,0 | 12,0 | 12,0 | 12,0 |
| Oleyl-cetylakohol + 10 E0 | 5,00 | 5,00 | 5,00 | 5,00 |
| Polyacrylcopolymer (Minimale Filmtemperatur 67 °C) | 2,5 | 2,5 | 2,5 | 2,5 |
| Farbstoff | 0,001 | 0,001 | 0,001 | 0,001 |
| Parfüm | 0,5 | 0,5 | 0,5 | 0,5 |
| 2-Phenoxyethanol | --- | 2,0 | --- | --- |
| 2-Phenylethanol | --- | --- | --- | 1,5 |
| Benzylalkohol | --- | --- | 2,0 | --- |
| Wasser (jeweils zu 100) | | | | |
| | | | | |
| pH-Wert | 8,0 | 8,0 | 8,0 | 8,0 |
| Rückstandverhalten | -2 | 0 | 0 | 0 |
| Lagerstabilität | | | | |
| Parfüm | 3 | 1 | 1 | 1 |

## Patentansprüche

1. Wäßriges Mittel zur Reinigung und Pflege von harten Oberflächen, insbesondere Fußböden, das in unverdünntem Zustand einen pH-Wert zwischen 5 und 9 aufweist und neben 1 bis 25 Gew.-% Tensid und 1 bis 30 Gew.-% an filmbildenden Materialien aus der Gruppe Wachse, Polymere und deren Mischungen 0,05 bis 11 Gew.-% eines Alkohols aus der Gruppe Benzylalkohol, 2-Phenylethanol, 2-Phenoxyethanol und deren Mischungen enthält.

2. Mittel nach Anspruch 1, das in unverdünntem Zustand einen pH-Wert zwischen 6 und 8 aufweist.

3. Mittel nach einem der Ansprüche 1 oder 2, dessen Tensidgehalt 5 bis 10 Gew.-% beträgt.

4. Mittel nach einem der Ansprüche 1 bis 3, dessen Gehalt an filmbildenden Materialien 4 bis 10 Gew.-% beträgt.

5. Mittel nach einem der Ansprüche 1 bis 4, dessen Gehalt an Alkohol aus der Gruppe Benzylalkohol, 2-Phenylethanol, 2-Phenoxyethanol und deren Mischungen 1 bis 5 Gew.-% beträgt.

6. Mittel nach einem der Ansprüche 1 bis 5, enthaltend ein Tensid aus der Gruppe anionische Tenside, nichtionische Tenside und deren Mischungen.

7. Verwendung eines Mittels nach einem der Ansprüche 1 bis 6 nach Verdünnung mit Wasser im Verhältnis 1 : 10 bis 1 : 200, vorzugsweise 1 : 50 bis 1 : 100 zur Reinigung und Pflege von harten Oberflächen, inbesondere Fußböden.

## Claims

1. An aqueous formulation for the care and cleaning of hard surfaces, more particularly floors which, in undiluted form, has a pH value of 5 to 9 and, in addition to 1 to 25% by weight of surfactant and 1 to 30% by weight of film-forming materials from the group of waxes, polymers and mixtures thereof, contains 0.05 to 11% by weight of an alcohol from the group consisting of benzyl alcohol, 2-phenylethanol, 2-phenoxyethanol and mixtures thereof.

2. A formulation as claimed in claim 1 which, in undiluted form, has a pH value of 6 to 8.

3. A formulation as claimed in claim 1 or 2 which has a surfactant content of 5 to 10% by weight.

4. A formulation as claimed in any of claims 1 to 3 which has a content of film forming materials of 4 to 10% by weight.

5. A formulation as claimed in any of claims 1 to 4 which has a content of alcohol from the group consisting of benzyl alcohol, 2-phenylethanol, 2-phenoxyethanol and mixtures thereof of 1 to 5% by weight.

6. A formulation as claimed in any of claims 1 to 5 containing a surfactant from the group of anionic surfactants, nonionic surfactants and mixtures thereof.

7. The use of the formulation claimed in any of claims 1 to 6 after dilution with water in a ratio of 1:10 to 1:200 and preferably 1:50 to 1:100 for the care and cleaning of hard surfaces, more particularly floors.

## Revendications

1. Produit aqueux de nettoyage et d'entretien de surfaces dures, notamment de sols, qui à l'état non dilué présente un pH compris entre 5 et 9, et comprend outre 1 à 25 % en poids de tensioactif et 1 à 30 % en poids de matériaux filmogènes du groupe des cires, des polymères et de leurs mélanges 0,05 à 11 % en poids d'un alcool du groupe de l'alcool benzylique, du 2-phényléthanol, du 2-phénoxyéthanol et de leurs mélanges.

2. Produit selon la revendication 1,
qui présente un pH compris entre 6 et 8 à l'état non dilué.

3. Produit selon l'une des revendications 1 ou 2,
dont la teneur en tensioactif est comprise entre 5 et 10 % en poids.

4. Produit selon l'une des revendications 1 à 3
dont la teneur en matériaux filmogènes est de 4 à 10 % en poids.

5. Produit selon l'une des revendications 1 à 4,
dont la teneur en alcool du groupe de l'alcool benzylique, du 2-phényléthanol, du 2-phénoxyéthanol et de leurs mélanges représente 1 à 5 % en poids.

6. Produit selon l'une des revendications 1 à 5,
comprenant un tensioactif du groupe des tensioactifs anioniques, des tensioactifs non ionique et de leurs mélanges.

7. Utilisation d'un produit selon l'une des revendications 1 à 6
après dilution avec de l'eau dans le rapport 1:10 à 1:200, de préférence 1:50 à 1:100 pour le nettoyage et l'entretien de surfaces dures, notamment des sols.
